# EUROPEAN PATENT APPLICATION

(11) **EP 3 293 039 A1**
(43) Date of publication of application: **14.03.2018**
(21) Application number: 16782688.2
(22) Date of filing: 13.04.2016
(51) Int. Cl.: B60M 1/234, B60M 1/30

(54) **DEVICE FOR REDUCING VIBRATIONS IN CONDUCTIVE AIRFOILS**

(30) Priority: 22.04.2015 ES 201530543
(71) Applicant: Postigo Pozo, Sergio, 29009 Málaga (ES)
(72) Inventor: Postigo Pozo, Sergio, 29009 Málaga (ES)
(74) Representative: Urizar Anasagasti, Jesus Maria
(86) International application number: PCT/ES2016/070257
(87) International publication number: WO 2016/170209

(57) **Abstract**

The invention relates to a device for reducing vibrations in conductive airfoils, comprising a bar (2) connected to the airfoil (9) by means of fastening parts (6) and used as a precompressor of the device (1), the two threaded ends thereof being inserted into parts (3) and (7), and comprising grooves for rotatably adjusting the bar (2) on its own axis; part (7) forming part of the spring (4) and damping means (5) assembly which is connected to the part (6) for fastening to the airfoil, these being the elements that allow the required rigidity and damping to be set respectively.

## Description

### Object of the invention

The object of the present invention is a new device for reducing vibrations in airfoils for collecting electric energy in rail transport and, more specifically, in the cases in which a rigid catenary is used.

### Technical field

The invention falls under the field of rail transport, relating to electrical power supply systems of the towing vehicles from conductive airfoils, usually called rigid catenaries.

### Background of the invention

Currently, inside of systems for collecting electric energy in rail transport there are three main types of collection: two at air level (flexible and rigid catenaries) and one at ground level (third rail). Each of the three types has inherent advantages and disadvantages. Currently in Spain, the third rail is of marginal use, unlike other countries such as Germany. In Spain, flexible catenaries are widely used, which enable higher operating speeds (speeds greater than 200 Km/h), compared to rigid catenaries, which currently enable lower operating speeds (speeds less than 120 Km/h). However, rigid catenaries are widely used as electrical power supply systems in tunnels, due to the great advantages thereof compared to flexible catenaries, such as the low chance of breakage in the wires, getting caught on the pantograph, smaller operating problems, ease of maintenance, etc. The main reason this system is not as widely used is due to the limitation in the maximum operating speed if compared to flexible catenaries.

Currently there is a rigid catenary solution implemented by Siemens that ensures viability with operating speeds up to 250 Km/h. This design is based, among other aspects, on shortening the distance between supports, reaching the need for span lengths of about 7 meters for the maximum operating speeds, which makes the installation with higher operating speeds more expensive.

### Existing technical problem and proposed solution

It is desirable for the systems for collecting energy in trains or other devices from a conductive airfoil (rigid catenary in rail transport) to be able to be run at higher speeds. The technical problem arises from the interaction between the airfoil of the catenary and the pantograph situated in the upper portion of the train. The contact between these two elements is established due to an approximate static force value of 100 newtons, which ensures physical contact between the catenary wire and the collector shoes of the head of the pantograph and the electrical conduit without interruptions or electric arcs. As the relative speed between the pantograph and the catenary increases, the dynamics of the two systems, together with other aspects such as the aerodynamics, start to act, producing oscillations in the contact force. This force is reduced to zero at certain points in time, causing gaps that discharge electric arcs between the collector shoes of the pantograph and the catenary wire.

These electric arcs are very powerful and generate high temperature areas, which melts the copper wire and the collector shoes of the pantograph, this accelerated loss of material together with the increase in the roughness of the contact surfaces, depletes the useful life of the elements, on occasion dividing it by four, and thus greatly increasing maintenance costs.

With the intention of resolving this problem, the present invention attempts to minimize the gaps between the catenary and the pantograph, increasing the useful life of the elements and reducing maintenance costs. Furthermore, the invention provides a second potential advantage, since it enables the length of the spans to be increased, moving the supports away from each other and achieving lower assembly and installation costs for the rigid catenary.

### Detailed description of the invention

The invention has a dual functional nature: on one hand it decreases the amplitude between the maximums of the contact force, which reduces the gaps between the pantograph and the rigid catenary in the entire range of operating speeds, including speeds much higher than the current operating ones; and on the other hand, it enables the length of the span between successive supports to be extended.

With the object of guaranteeing that the electric current collected between the pantograph and the rigid catenary is suitable and that electric arcs that accelerate the wear and tear on the system do not appear, the invention that is described below attempts to absorb the energy of the natural modes of vibration that are amplified due to the pantograph-catenary interaction and cause the gaps and electric arcs that accelerate wear and tear. Additionally, the invention enables, thanks to the possibility of pre-tightening the components thereof, a precamber to be achieved in the catenary which minimizes the initial sagging due to the weight thereof, which makes extending the span possible, separating the supports from each other.

The new invention can be understood as modular, where each individual module comprises at least one distancing bar fastened between two brackets. Furthermore, it could contain a known rigidity element (usually a spring) and another energy-dissipating element (usually damping means). Both elements forming an assembly or being separate. The elements are placed aligned on the catenary airfoil and connected to it, as said previously, through brackets and, at least one bar that enables the catenary connection points of the invention to be moved away from each other. The bar should include an extender in order to expand it or the same bar could be used as an extender by incorporating right and left-hand threads in the ends thereof such that the rotation on the axis thereof enables the precompression of the system in a controlled manner. The invention, due to the dimensions and assembly thereof, is able to be mounted in electrification installations with rigid catenaries with reduced space and without needing electrical insulators.

For extra damping needs or special span length configurations can be chosen where several of the individual modules that were just described are used.

It is also possible to use two bars instead of one in the invention, in order to center the position of the elastic element and heat sink in a balanced position. In this situation, each one of the two bars would be anchored on one side of the bracket which is fastened to the catenary and on the other to the assembly formed by the elastic element and the heat sink. The extender in this configuration could be included in the intermediate assembly of the elastic element and heat sink.

### Description of the drawings

For the purpose of complementing the description of the characteristics of the invention and as a preferred, practical exemplary embodiment thereof, several figures are added, which by way of illustration and not limitation represent the following:
Figure 1: Perspective view of an individual module of the invention.
Figure 2: Schematic elevation view of three modules assembled in one of the possible configurations in order to increase the length between supports.
Figure 3: Illustration of the evolution in the contact force between the pantograph and the catenary with and without the invention.

### Preferred embodiment of the invention

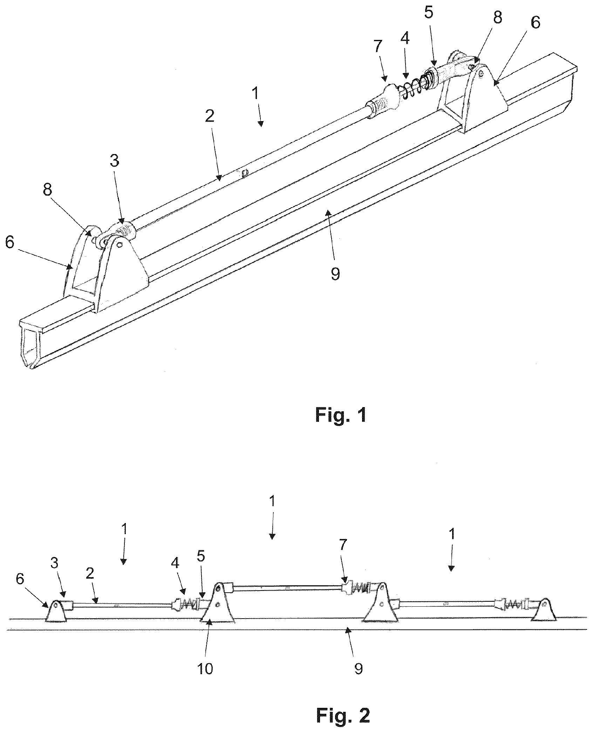

With reference to figures 1 and 2, an exemplary embodiment of the invention (1) can be seen for the improvement of the contact between the catenary and the pantograph while the latter slides on the catenary during the use thereof. The invention (1) basically comprises a bar (2), connected at the two ends thereof with a fastening (3) and with a spring assembly (4) and damping means (5); all of this fastened to the ends thereof to two brackets (6) by means of bolts (8), which are anchored to the rigid catenary (9).

Figure 1 shows a perspective view of the invention (1) that is being described. The figure shows each of the essential elements that the device (1) comprises in a simple configuration. The bar (2) would be used in the design shown as a pretensioner of the device (1), the two right and left-hand threaded ends thereof being inserted into the parts (3) and (7). In order to make the precompression of the system possible, the bar (2) incorporates grooves that facilitate rotatably adjusting the bar (2) on its own axis. The part (7) in the design shown forms part of the spring (4) and damping means (5) assembly these being the elements that allow the required rigidity and damping to be set respectively. The parts (3) and (5) are connected by means of bolts (8) to the brackets (6) that are fastened to the rigid catenary airfoil (9), which does not as such form part of the invention, but that has been included in the figure in order to better illustrate the assembly.

Figure 2 shows by way of example a configuration with three modules of the invention (1) placed at distinct distances from the rigid catenary airfoil in order to increase the equivalent rigidity of the assembly and be able to significantly increase the distance between supports of the catenary by increasing the length of the span. The three modules of the invention (1) are made up by the same components presented in figure 2 with the sole difference of the use of intermediary brackets (10) with two heights, as compared to the brackets (6) with a single height. The brackets with two heights (10) can be substituted by brackets with a single height (6) suitably setting the rigidity values of the central module or considering an assembly where the alignment of the invention of the outer modules is not parallel to the catenary airfoil but rather that it forms an angle with the same, approximately outlining an arch above the catenary between all the modules.

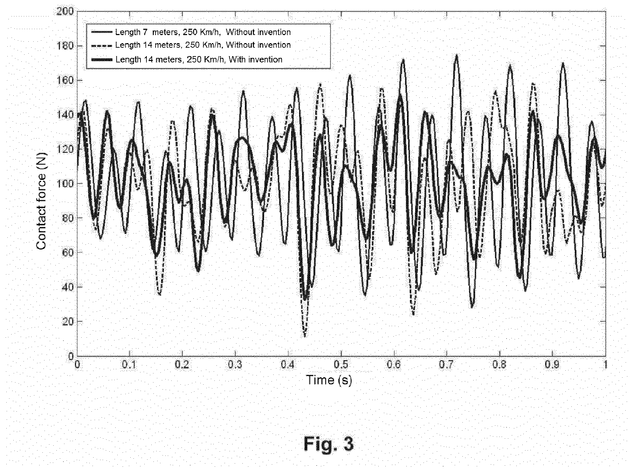

Figure 3 shows the results of three simulations of the evolution in the contact force in the interaction between the pantograph and the rigid catenary at 250 Km/h for: length of separation between supports of 7 meters without the invention, length of 14 meters between supports without the invention and length of 14 meters between supports with the invention. It is observed that the amplitude of the oscillations in the contact forces are reduced for the case of spans that have double the initial length when the invention is installed.

Having sufficiently described the nature of the present invention, in addition to an example of implementation, it must be added that the shape and materials of said invention may be modified, provided that it does not imply altering the characteristics claimed below.

## Claims

1. A device for reducing vibrations in conductive airfoils for collecting electric energy in rail transport that use a rigid catenary, **characterized in that** it is made up of two brackets (6) that are anchored to the rigid catenary (9) to which a bar (2) is fastened.

2. The device, according to claim 1, **characterized in that** it incorporates a flexible pushing mechanism and/or a damping mechanism, suitable for setting the rigidity and/or the damping respectively between these points.

3. The device, according to the preceding claims **characterized in that** the flexible pushing mechanism is made up of a spring (4) which is fastened to one of the ends (7) of the bar (2) and one of the brackets (6) that are anchored to the rigid catenary (9).

4. The device, according to the preceding claims **characterized in that** the damping mechanism (5) is fastened to one of the ends of the bar (2) and one of the brackets (6) that are anchored to the rigid catenary (9).

5. The device, according to the preceding claims **characterized in that** the flexible pushing and damping mechanism is made up of a spring (4) which, together with the damping means (5), is fastened to one of the ends (7) of the bar (2) and one of the brackets (6) that are anchored to the rigid catenary (9).

6. The device, according to the preceding claims, **characterized in that** the bar (2) that is used as a pretensioner of the device (1) is inserted by the two ends thereof by means of right and left-hand threads in the parts (3) and (7), which are respectively fastened to one of the brackets (6) and in the flexible pushing and damping mechanism.

7. The device, according to the preceding claims, **characterized in that** at least one of the brackets of the device (10) comprises means of coupling to other units of the same, placed on top of the rigid catenary airfoil (9) in order to increase the equivalent rigidity of the assembly, which enables the distance between supports of the catenary to be increased.

8. The device, according to the preceding claims, **characterized in that** the different units of the device are placed at different heights with respect to the rigid catenary (9) for the purposes of which the intermediary brackets (10) have means for connecting to the bar (2) and to the flexible pushing and damping mechanisms at two heights, at least.

9. The device, according to the preceding claims, **characterized in that** the different units of the device (1) are placed at the same height in a consecutive manner and connected by the ends of each bar (2) of the consecutive unit to a same bolt (8) of the brackets (6).
